# EUROPEAN PATENT APPLICATION

(11) **EP 3 511 164 A1**
(43) Date of publication of application: **17.07.2019**
(21) Application number: 18151831.7
(22) Date of filing: 16.01.2018
(51) Int. Cl.: B33Y 10/00, B33Y 40/00, B29C 64/153, B29C 64/40, B29C 64/10

(54) **SUPPORT STRUCTURE FOR THREE-DIMENSIONAL PRINTING**

(71) Applicant: Siemens Aktiengesellschaft, 80333 München (DE)
(72) Inventor: Ceriani, Nicola Maria, 91052 Erlangen (DE)

(57) **Abstract**

A support structure (1) for supporting a printed part (2) and establishing a connection of a building plate (3) to the printed part (2), which part (2) is printed by means of a three-dimensional printing system, the support structure (1) being arrangeable on the building plate (3) of the three-dimensional printing system. At least one part (4) of the support structure (1) is designed to change its outer shape when there is an external force on the support structure (1), to break the connection of the building plate (3) to the printed part (2) and detach the supported printed part (2).

## Description

The present disclosure is directed to a support structure for supporting a part, which is printed by means of a three-dimensional printing system, according to claim 1. Furthermore, the present disclosure is directed to a use of a support structure for supporting a printed part according to claim 8, a method of printing a part three-dimensionally by means of a three-dimensional printing system according to claim 9 and a method of breaking a connection between a building plate and a printed part according to claim 11.

Most three-dimensional printing systems produce parts which are physically attached to a building plate. Usually, the building plate comprises a metal plate on top of which melted material is deposited layer by layer until the complete part is obtained. Normally, support structures connect the printed part with the building plate. These support structures are geometries which allow a deposition of overhanging material during a printing process.

In order to free the printed part from the building plate, the support structures have to be cut or removed. In case of metal parts this is usually done using machine tools like band/wire saws or electrical discharge machines. As an alternative, the cutting/removing can be done manually, using hand tools like pliers, chisels or hammers.

Both methods, by machine or manually, are time consuming and, if performed manually, require skilled operators and imply the risk of errors. More than this, the manual removal of the support structures is a potential source of injuries for the operator, can cause an uneven product quality and potential defects and is economically unfavorable.

EP 3 067 332 A1 discloses a method for manufacturing a three-dimensional structure, including forming a glass pattern on a base member and then separating the glass pattern from the base member. For the purpose of separating base member and printed structure an additional separation aid layer is produced by applying non-sinterable paste on the surface of the base member.

An objective of the present invention is to facilitate a breaking of the connection between a part printed by means of a three-dimensional printing system and a building plate, the printed part is attached to.

The problem is solved by a support structure for supporting a printed part and establishing a connection of a building plate to the printed part, which part is printed by means of a three-dimensional printing system, the support structure being arrangeable on the building plate of the three-dimensional printing system, according to claim 1.

Furthermore, the problem is solved by the use of a support structure for supporting a printed part and establishing a connection of a building plate to the printed part, which part is printed by means of a three-dimensional printing system, according to claim 8.

In addition, the problem is solved by a method of printing a part three-dimensionally by means of a three-dimensional printing system according to claim 9.

The problem is also solved by a method of breaking a connection between a building plate and a printed part according to claim 11.

According to the invention, at least one part of the support structure is designed to change its outer shape when there is an external force on the support structure. Due to the changeability of the support structure the connection of the building plate to the printed part is breakable by means of an external force. Thereby, the supported printed part can be detached.

Advantageously, the printed part can be freed from the building plate without any cutting or breaking devices/tools. There is no need of performing machining operations. Thus, the time needed for the removal of the printed part from the building plate can be reduced significantly. More than this, manual supports removal operations performed with hand tools, which can generate health and safety risks and constitute a source of variability in a quality of the printed part, are avoided.

In a preferred embodiment of the invention, the at least one part of the support structure, being designed to change its outer dimensions when there is an external force on the support structure, is designed as a bellows. The geometry of a bellows makes it flexible and gives it the capability of elongating when an external force, e.g. a pressure of a fluid, is applied on its internal surface. Bellows are usually used in applications where a flexible joint is needed to accommodate displacements of adjacent parts or when parts have to deform under pressure, e.g. in joints for pressurized pipes. Their basic shape is cylindrical, but in the course of the invention every possible shape can be used.

Preferably, the bellows is arranged at a center portion of the support structure to divide the support structure into three parts: one first part below the bellows, one second part above the bellows and the bellows as one third part. In other words, the bellows is interposed in the support structure so as to divide the structure into three parts. The first part (below the bellows) is adjacent to the building plate, while the second part is adjacent to the printed part.

According to a further preferred embodiment of the invention, the bellows comprises one open end portion and one closed end portion, wherein the open end portion preferably comprises a pipe connector. The open end can be used to deform the bellows and break the support structure, e.g. by filling in a fluid into an inner part of the bellows. The filling can be advantageously facilitated using a pipe connector which is arranged on the open end portion of the bellows.

Preferably, the at least one part of the support structure, the part being able to be attached to the printed part and/or the building plate, is lattice-shaped, wherein the lattice-shaped part is connected to the bellows by means of geometries which break in case the bellows elongates when an external force is applied on the bellows. Such geometries usually have a sharp section reduction that generates a stress concentration in the point of minimum section. This shape allows a predictable breaking of the supports when the bellows is deformed by means of an external force.

In a further embodiment of the support structure according to the invention the at least one part of the support structure, especially the bellows, is shaped according to a projected area of the printed part with respect to the building plate. In other words, the at least one part of the support structure respectively the bellows is shaped according to a footprint of the printed part on the building plate. For example, the footprint can be rectangular or circular.

In a preferred embodiment of the invention the support structure is printed by the three-dimensional printing system. Thus, the support structure, especially comprising the bellows, is printable together with the part by means of the three-dimensional printing system. After having printed the support structure, the part can be directly printed on top of the support structure, forming a single material block.

The problem is also solved by using a support structure according to the invention for supporting a printed part and establishing a connection of a building plate to the printed part, which part is printed by means of a three-dimensional printing system.

The problem is further solved by a method of printing a part three-dimensionally by means of a three-dimensional printing system, wherein the method comprises the following steps:
a) A support structure according to the invention is arranged on a building plate and is connected the support structure to the building plate.
b) The (actual) part is printed on the support structure by means of a three-dimensional printing system, wherein the support structure connects the building plate to the printed part.
c) The connection between the building plate and the printed part is broken by means of applying an external force on the support structure.
d) The printed part is detached from the building plate.

The support structure is preferably printed by means of a three-dimensional printing system and is arranged on the building plate and connected to the building plate. Most preferably, the support structure is printed by means of the same three-dimensional printing system as the (actual) printed part.

It is also possible using a support structure that is not printed, especially not printed by the same three-dimensional printing system. But it is essential that the support structure is designed to change its outer shape when there is an external force on the support structure. It is also possible to use a support structure which is partly printed, especially by the same three-dimensional printing system as the printed part, and partly not printed. For example, an (external) not printed bellows can be used as one part of the support structure while the other parts of the support structure above and below the bellows are printed, especially by the same three-dimensional printing system as the printed part.

The problem is also solved by a method of breaking a connection between a building plate and a printed part, the connection being established by means of a support structure according to the invention, and the part having been printed on the support structure by means of a three-dimensional printing system. The method comprises the following steps:
i) A conduit is connected to an open end portion of the bellows.
ii) A fluid is conveyed into the bellows, preferably by means of a pipe connector.
iii) A pressure is applied to the fluid to fill an inner part of the bellows and to elongate the bellows.

The elongation of the bellows causes a break of the connection between the bellows and the first and second part of the support structure, being arranged above and below the bellows. Thus, the printed part can be detached from the building part easily, without machine or manual tools or the like.

Features of examples of the present disclosure will become apparent by reference to the following detailed description of the drawings. For the sake of brevity, reference numerals or features having a previously described function may or may not be described in connection with other drawings in which they appear.
- Fig. 1: illustrates a support structure for a three-dimensionally printed part according to the state of the art;
- Fig. 2: illustrates a support structure for a three-dimensionally printed part according to the in-vention;
- Fig. 3: represents a perspective view of a bellows;
- Fig. 4: represents a longitudinal cut through a bellows;
- Fig. 5: illustrates a support structure comprising lattice-shaped parts;
- Fig. 6: illustrates an elongation of the support structure according to Fig. 5;
- Fig. 7: represents a longitudinal cut through a bellows being filled with a powder;
- Fig. 8: illustrates emptying the bellows according to Fig. 7; and

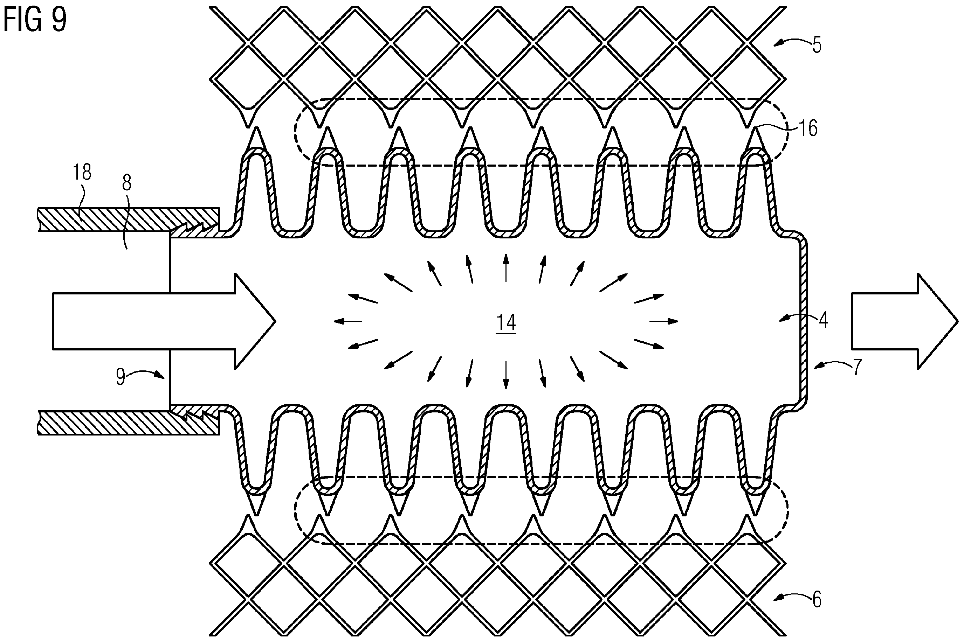

- Fig. 9: illustrates filling an inner part of the bellows according to Fig. 7 and 8 with a fluid.

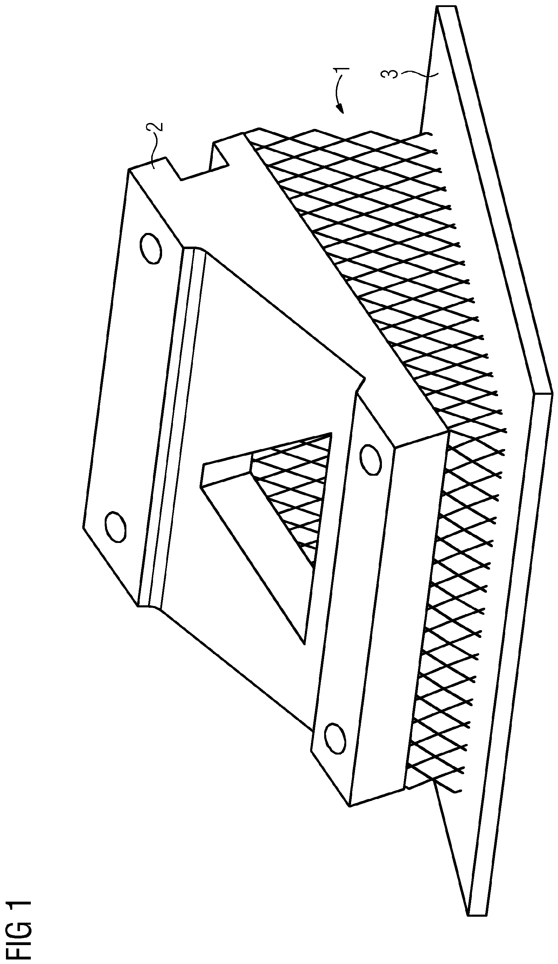

In Figure 1 there is depicted a support structure 1 for supporting a part 2 and connecting the part 2 to a building plate 3. The part 2 has been printed by a three-dimensional printing system (not shown) and has been deposited on the support structure 1 in order to allow a deposition of overhanging material during the printing process.

In order to free the printed part 2 from the building plate 3, the support structure 1 has to be cut or removed. In case of metal parts this is usually done using machine tools like band/wire saws or electrical discharge machines. As an alternative, the cutting/removing can be done manually, using hand tools like pliers, chisels or hammers.

Both methods, by machine or manually, are time consuming and, if performed manually, require skilled operators and imply the risk of errors. More than this, the manual removal of the support structure 1 is a potential source of injuries for the operator, can cause an uneven product quality and potential defects and is economically unfavorable.

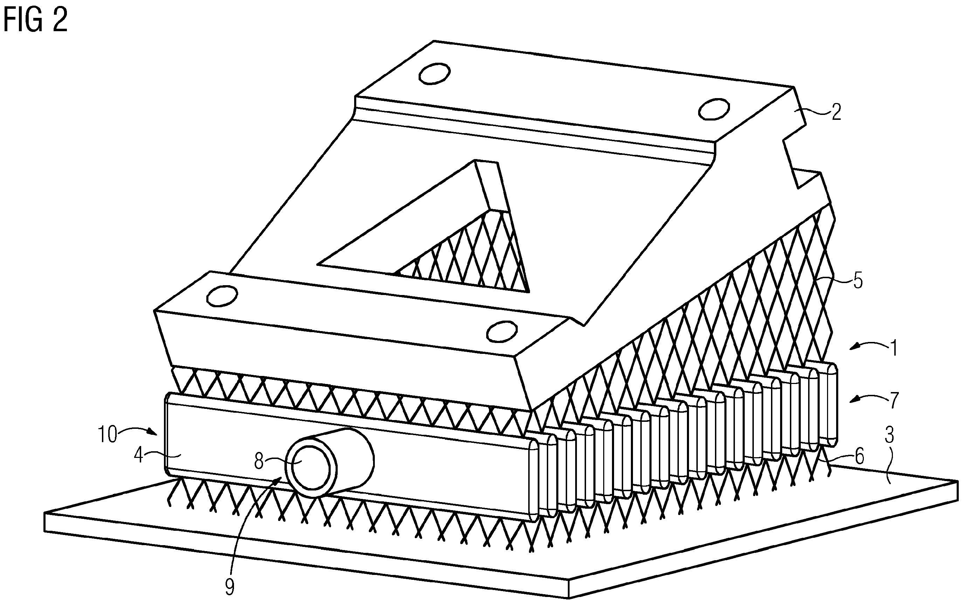

Figure 2 shows a support structure 1 according to the invention. The support structure 1 connects the printed part 2 to the building plate 3. It comprises a first part 6, being arranged on the building plate 3, and a second part 5, being arranged below the printed part 2. Additionally, the support structure 1 comprises a third part 4 which is arranged at a center portion 10 of the support structure 1, above the first part 6 and below the second part 5.

The third part 4 is designed as a bellows 4. The bellows 4 is rectangular-shaped according to a projected area or footprint of the printed part 2. The bellows 4 is arranged parallel to the building plate 3, which is not mandatory. In contrast, any useful orientation of the bellows 4 in relation to the building plate 3 is possible. The bellows 4 comprises a pipe connector 8, forming one open end portion 9. Other types of connectors as the one shown in Figure 2 are also possible, e.g. threaded connectors.

The end portion 7 arranged oppositely from the open end portion is closed (not visible in Fig. 2). The bellows 4 is printed by the same three-dimensional printing system as the (actual) printed part 2.

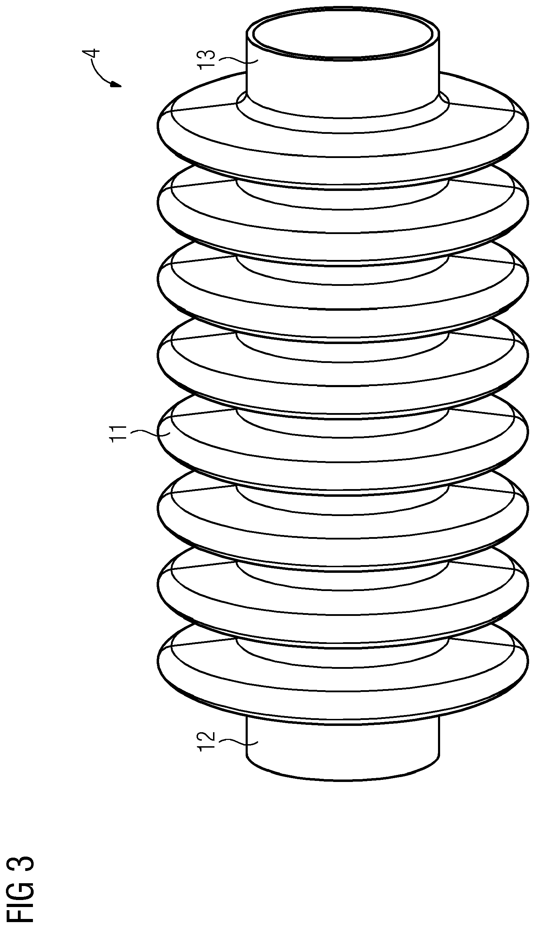

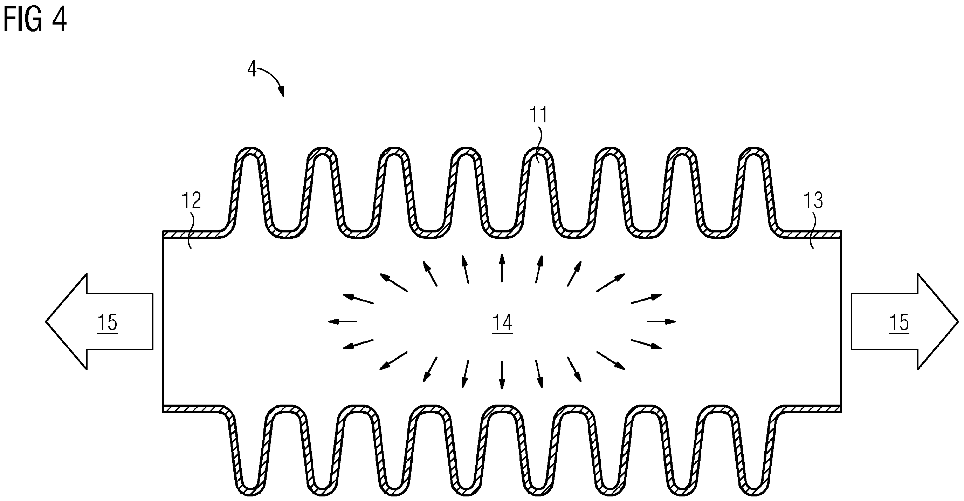

Figures 3 and 4 illustrate a general functional principle of a cylindrical bellows 4. The bellows 4 comprises a corrugated portion 11 and two smooth end portions 12, 13. The geometry of the bellows 4 makes it flexible and gives it the capability of elongating when a pressure 14 is applied on its internal surface. Figure 4 illustrates the longitudinal elongation 15 of the bellows 4 in case of an application of an internal pressure 14.

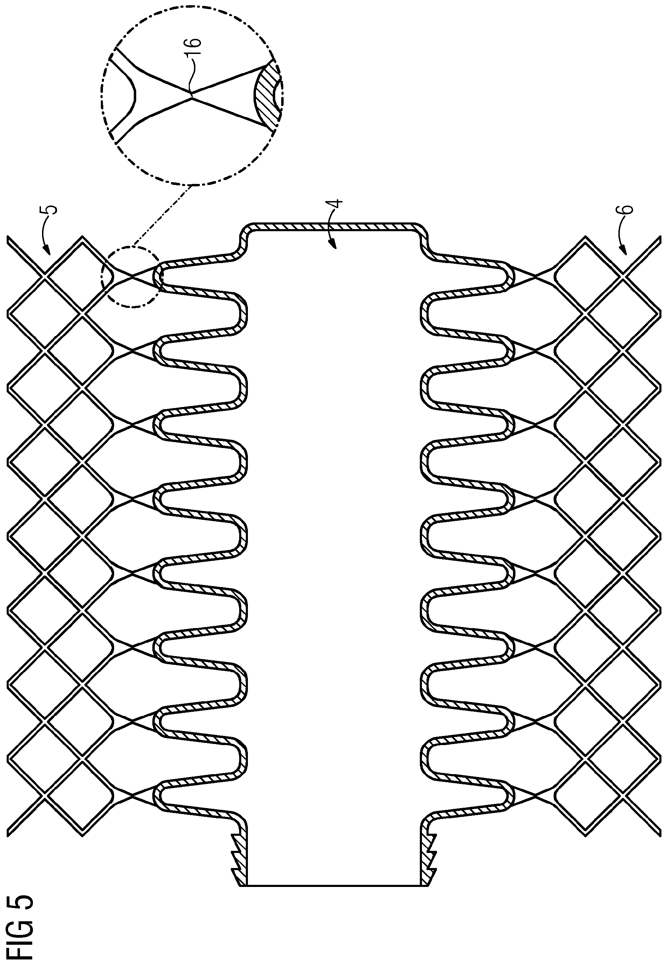

The first part 6 and the second part 5 of the support structure 1 are lattice-shaped and connect the bellows 4 with the building plate 3 respectively the printed part 2. Connection is made by means of geometries 16 that are breakable if the bellows 4 expands/elongates. Figure 5 illustrates the lattice-shaped first part 6 and second part 5 as well as the connecting geometries 16.

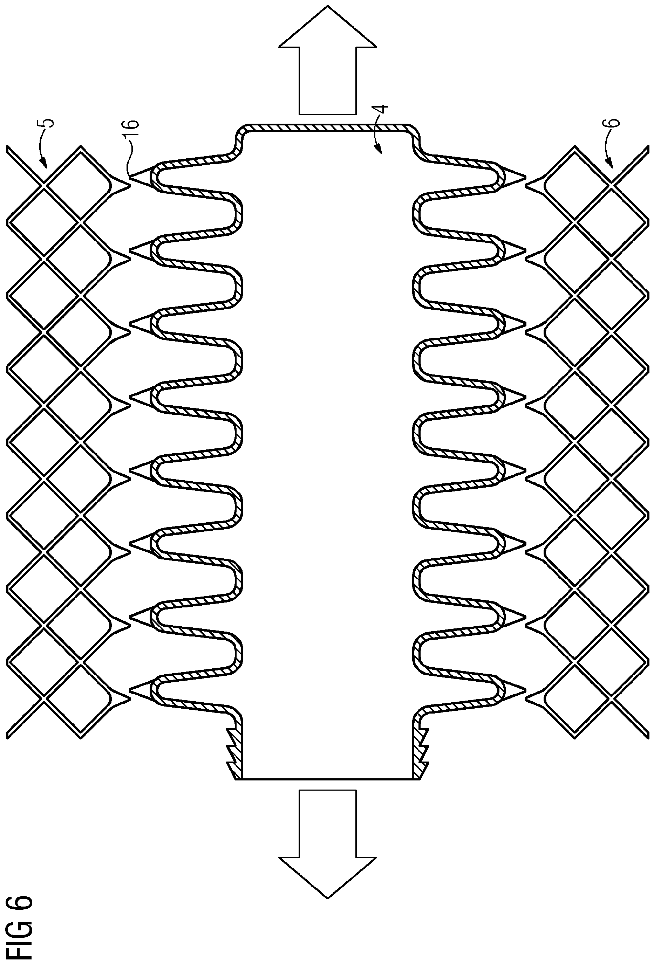

Figure 6 illustrates a breaking of the geometries 16 when the bellows 4 is elongating due to an internal application of pressure 14. The support structure 1 according to the invention allows a predictable breaking of connection between the printed part 2 and the building plate 3 when the bellows 4 is deformed.

In the following, a method of printing a part 2 three-dimensionally by means of a three-dimensional printing system is described.

At first, a support structure 1 according to the invention is arranged on a building plate 3 by means of the three-dimensional printing system. Thereby, the support structure 1 is connected to the building plate 3 by chemical and/or physical adhesion.

In a next step the part 2 is printed on the support structure 1, strictly speaking on the second part 5 of the support structure 1, by means of a three-dimensional printing system, wherein the support structure 1 connects the building plate 3 to the printed part 2.

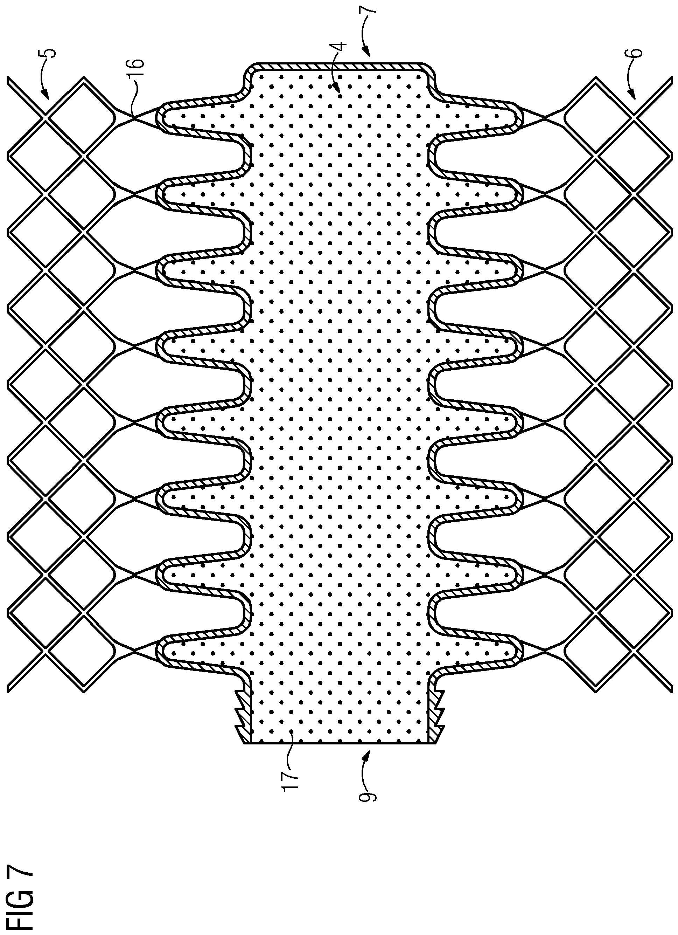

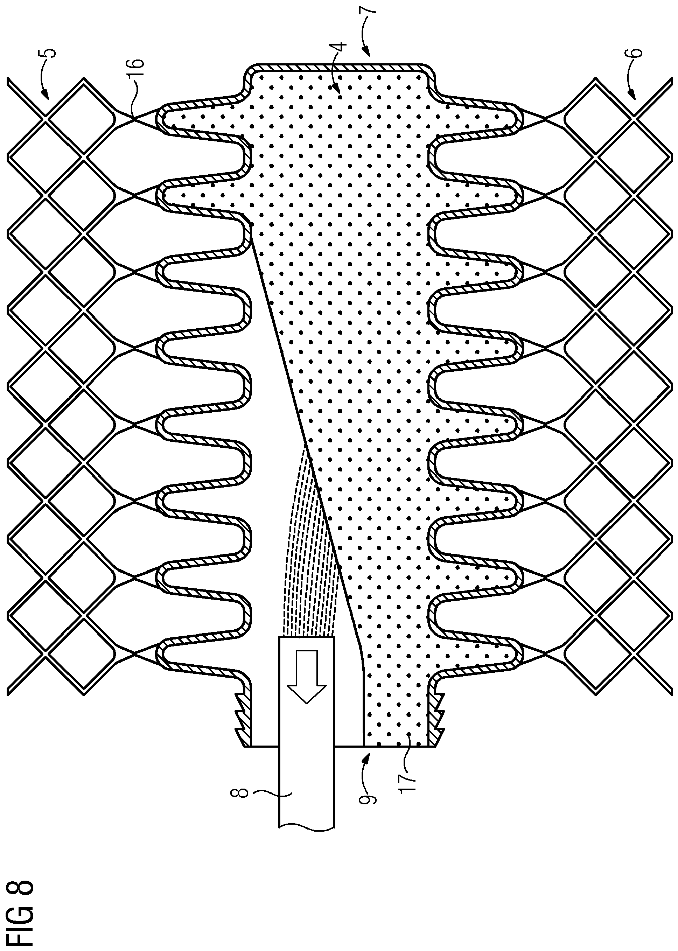

As a result of the three-dimensional printing process the interior of bellows 4 is filled with a powder 17. Figure 7 shows the bellows 4 filled completely with the powder. Figure 8 illustrates a removal of the powder 17 by means of the pipe connector 8, using e.g. pressurized air or a vacuum cleaner.

Consecutively, a conduit 18 conveying a pressurized fluid is connected to the pipe connector 8 of the bellows 4. Pressure is applied to the fluid which fills an interior of the bellows 4. The bellows 4 elongates due to the applied pressure 14. Thereby, the connections 16 are broken and the printed part 2 is freed from the building plate 3.

At last, the printed part 2 can be detached from the building plate 3.

While one example has been described in detail, it is to be understood that the disclosed example may be modified. Therefore, the foregoing description is to be considered non-limiting.

## Claims

1. Support structure (1) for supporting a printed part (2) and establishing a connection of a building plate (3) to the printed part (2), which part (2) is printed by means of a three-dimensional printing system, the support structure (1) being arrangeable on the building plate (3) of the three-dimensional printing system, **characterized in that**
at least one part (4) of the support structure (1) is designed to change its outer shape when there is an external force on the support structure (1), to break the connection of the building plate (3) to the printed part (2) and detach the supported printed part (2).

2. Support structure (1) according to claim 1, wherein the at least one part (4) of the support structure (1), being designed to change its outer dimensions when there is an external force (14) on the support structure (1), is designed as a bellows (4).

3. Support structure (1) according to claim 2, wherein the bellows (4) is arranged at a center portion (10) of the support structure (1) to divide the support structure (1) into three parts (4, 5, 6): one first part (6) below the bellows (4), one second part (5) above the bellows (4) and the bellows (4) as one third part (4).

4. Support structure (1) according to claim 2 or 3, wherein the bellows (4) comprises one open end portion (9) and one closed end portion (7), wherein the open end portion (9) preferably comprises a pipe connector (8).

5. Support structure (1) according to one of claims 2 through 4, wherein at least one part (5, 6) of the support structure (1), the part (5, 6) being able to be attached to the printed part (2) and/or the building plate (3), is lattice-shaped, wherein the lattice-shaped part (5, 6) is connected to the bellows (4) by means of geometries (16) which break in case the bellows (4) elongates when an external force (14) is applied on the bellows (4).

6. Support structure (1) according to one of the preceding claims, wherein the at least one part (5, 6) of the support structure (1) is shaped according to a projected area of the printed part (2) with respect to the building plate (3).

7. Support structure (1) according to one of the preceding claims, wherein the support structure (1) is printed by the three-dimensional printing system.

8. Use of a support structure (1) according to one of claims 1 through 7 for supporting a printed part (2) and establishing a connection of a building plate (3) to the printed part (2), which part (2) is printed by means of a three-dimensional printing system.

9. Method of printing a part (2) three-dimensionally by means of a three-dimensional printing system, comprising:
a) Arranging a support structure (1) according to one of claims 1 through 7 on a building plate (3) and connecting the support structure (1) to the building plate (3);
b) Printing the part (2) on the support structure (1) by means of a three-dimensional printing system, wherein the support structure (1) connects the building plate (3) to the printed part (2);
c) Breaking the connection between the building plate (3) and the printed part (2) by means of applying an external force on the support structure (1);
d) Detaching the printed part (2) from the building plate (3).

10. Method according to claim 9, wherein the support structure (1) is arranged on the building plate (3) and connected to the building plate (3) by means of the three-dimensional printing system.

11. Method of breaking a connection between a building plate (3) and a printed part (2), the connection being established by means of a support structure (1) according to at least claim 5, and the part (2) having been printed on the support structure (1) by means of a three-dimensional printing system, the method comprising:
i) Connecting a conduit (18) to an open end portion (9) of the bellows (4);
ii) Conveying of a fluid into the bellows (4), preferably by means of a pipe connector (8);
iii) Applying a pressure (14) to the fluid to fill an inner part of the bellows (4) and to elongate the bellows (4).
